Europäisches Patentamt

European Patent Office

Office européen des brevets

(11) Veröffentlichungsnummer: **0 355 445**
**A2**

## EUROPÄISCHE PATENTANMELDUNG

(21) Anmeldenummer: 89113737.4

(22) Anmeldetag: 25.07.89

(51) Int. Cl.⁴ **B65D 13/00**

(30) Priorität: 08.08.88 DE 8811376 U

(43) Veröffentlichungstag der Anmeldung:
28.02.90 Patentblatt 90/09

(84) Benannte Vertragsstaaten:
**AT BE CH DE ES FR GB GR IT LI LU NL SE**

(71) Anmelder: **Kakuk, Stefan**
**Brunnenstrasse 5**
**D-6839 Oberhausen-Rheinhausen(DE)**

(72) Erfinder: **Kakuk, Stefan**
**Brunnenstrasse 5**
**D-6839 Oberhausen-Rheinhausen(DE)**

(74) Vertreter: **Ratzel, Gerhard, Dr.**
**Seckenheimer Strasse 36a**
**D-6800 Mannheim 1(DE)**

(54) **Verpackungsteil.**

(57) Die Erfindung betrifft ein Verpackungsteil aus biologischem Material, welches aus verpreßtem Stroh und/oder Heu besteht. Dieses Verpackungsteil ist nach einer bevorzugten Ausführungsform als Behälter (1) ausgebildet; es kann nach einer weiteren bevorzugten Ausführungsform als winkelförmiger Kantenschutz (2) ausgebildet sein; es kann ferner nach einer weiteren bevorzugten Ausführungsform als winkelförmiger Eckschutz (3) mit an einer Stirnseite angeordneten Wandung ausgebildet sein. Weitere bevorzugte Ausführungsformen sind die Ausbildungen des Verpackungsteils als winkelförmige Schale (5), als Würfel (8), als Vierkantstab (9), als Platte (10), als Zylinder (11), als kugelförmiges Auffüllmaterial (12) oder als Rohr (13). In den Flächen bzw. Wandungen des Verpackungsteils können eingepreßte Vertiefungen, Löcher oder Rillen eingearbeitet sein. Das Verpackungsteil kann mit oder ohne Klebstoff ausgebildet sein; es kann ferner eine Beschichtung aufweisen.

Fig.1

## Verpackungsteil

Die Erfindung betrifft ein Verpackungsteil aus biologischem Material, wie gepreßtem Stroh und oder Heu.

Zum Versand von Handelsgütern aller Art werden zum Schutze gegen Beschädigung während des Transports Verpackungsmaterialien aus Kunststoff, wie z. B. "Styropor" oder ähnliches verwendet.

Neben diesen Materialien werden auch Holz bzw. Pappe als Behälter verwendet.

Das heute verwendete Verpackungsmaterial, sollte wegen der späteren Beseitigung und der großen Umweltbelastung biologisch abbaubar sein und aus biologischen Stoffen hergestellt werden.

Der riesige und immer steigende Bedarf an Verpackungsmaterialien, sollte aus den in der Natur in großen Mengen vorkommenden Rohstoffen hergestellt werden. Durch großen Verbrauch von diesem Rohstoff soll andererseits die Natur nicht zerstört werden, wie z.B. durch Abholzen von Wäldern. Die Rohstoffe, die in der Natur in geringen Mengen vorkommen und biologisch nicht abbaubar sind, wie Erdöl, sollten nicht für die Herstellung von Verpackungsmaterialien, wie "Styropor" und gleichartigen Erzeugnissen verwendet werden.

Die heute verwendete Verpackung muß auch zeitgemäß sein. Einfaches Verpackungsmaterial wie Strohgeflecht oder loses Stroh, erfüllt heute nicht mehr den geforderten Zweck.

Alle diese Anforderungen, werden von dem bisher bekannten Verpackungsmaterial meist nicht oder nur teilweise erfüllt.

Der Erfindung liegt daher die Aufgabe zugrunde, Verpackungsteile bereitzustellen, welche aus biologischem bzw. organischem Material hergestellt sind und welche den modernsten Formen der Verpackung entspricht und diese sogar ergänzt.

Diese Aufgabe wird erfindungsgemäß dadurch gelöst, daß eine ökologische Verpackung aus gepreßtem Stroh bzw. Heu hergestellt wird, daß die Verpackungsteile als Schachtel, Kantenschutz, Eckschutz, Platte, Stab oder Würfel, zylinderförmig, als kugelförmiges Auffüllmaterial, als Schale oder Rohr hergestellt wird.

Die erfindungsgemäßen Verpackungsteile sind aus reichend fest, um die zu verpackende Ware zu schützen. Die Oberfläche der Verpackungsteile ist glatt, wobei die Außenoberfläche mit x-beliebigem Muster, Rillen oder durchgehenden Löchern bzw. Bohrungen versehen werden kann.

Die Oberfläche kann auch beschichtet oder farbig gestaltet sein.

Die erfindungsgemäßen Verpackungsteile können nach ihrem Gebrauch als Brennstoff oder aufgeweicht als Düngemittel verwendet werden.

Durch gepreßtes Stroh oder Heu sind diese Verpackungsteile absolut biologisch und in keiner Weise umweltbelastend.

Durch großes Vorkommen in der Natur ist Stroh und Heu ein Abfallprodukt, dessen Beseitigung, in welcher Form auch immer, bisher größtenteils sinnlos und belastend war.

Die Herstellung von diesen Verpackungsteilen erfolgt durch Verpressung von aufgeweichtem bzw. aufbereitetem Stroh und Heu, ohne oder unter Beimischung von biologischem bzw. organischem Kleber, bzw. Bindemittel, wobei die Verpressung ohne Beimischung jeglicher Substanzen bevorzugt wird.

Besondere Ausführungsformen der Erfindung sind in den beigefügten Zeichnungen dargestellt und werden nun näher erläutert.

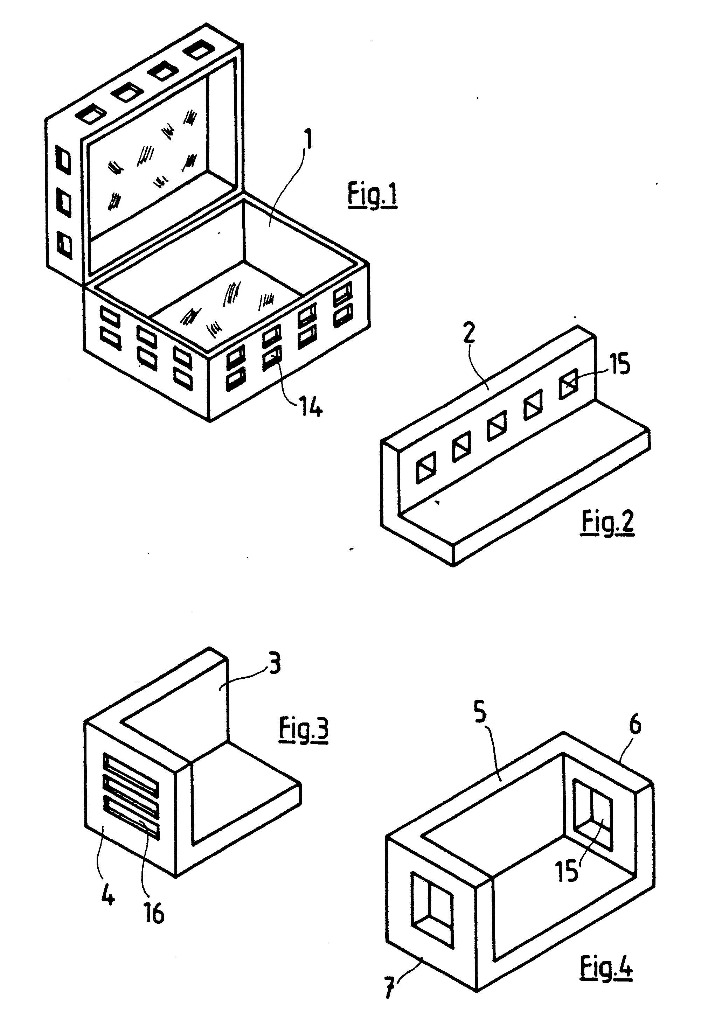

Figur 1 zeigt eine Schachtel oder einen Behälter 1, mit eingepreßten Vertiefungen 14.

Die Figur 2 zeigt einen winkelförmigen Kantenschutz 2 mit durchgehenden Löchern und/oder Bohrungen 15.

Solche Aussparungen, wie diese Bohrungen 15, sind insbesondere aus Gewichtsgründen in die Verpackungsteile eingearbeitet.

Die Figur 3 zeigt einen winkelförmigen Eckschutz 3 mit an einer Stirnseite angeordneten Wandung 4.

In diesem Ausführungsbeispiel sind in der Wandung 4 eingepreßte Rillen 16 angeordnet.

Die Figur 4 zeigt eine winkelförmige Schale 5 mit an beiden Stirnseiten angeordneten Wandungen 6 und 7. Auch hier können, wie in dieser Abbildung angedeutet ist, Materialaussparungen in Form von Löchern oder Bohrungen 15 eingearbeitet werden.

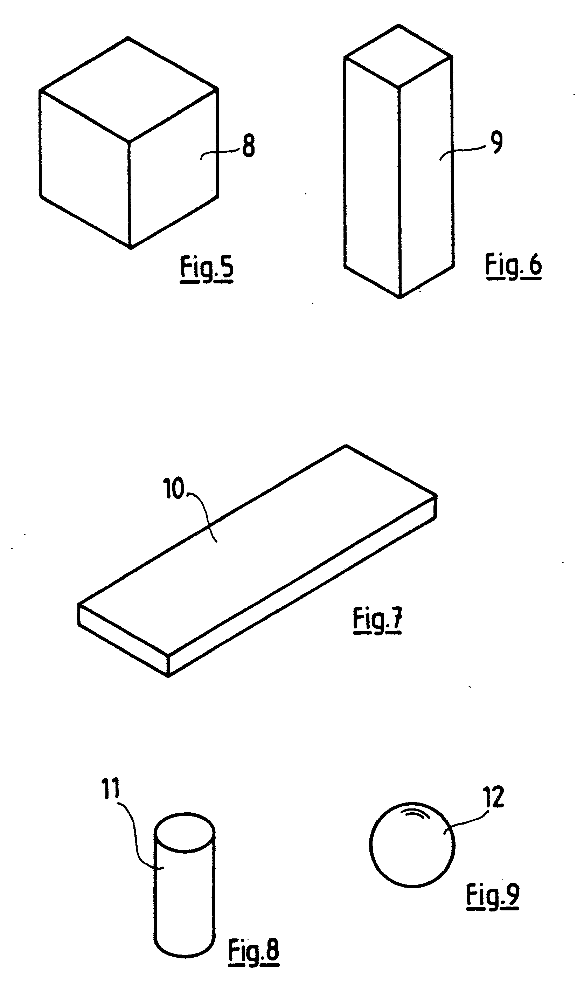

Die Figur 5 zeigt ein würfelförmiges Verpackungsteil 8, die Figur 6 ein Verpackungsteil mit der Form eines Vierkantstabes 9 und Figur 7 ein Verpackungsteil in der Form einer Platte 10.

Die Figur 8 zeigt ein zylinderförmiges Verpackungsteil 11.

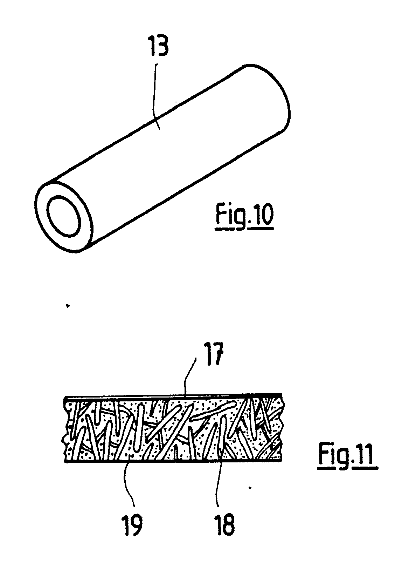

Figur 9 zeigt ein kugelförmiges Verpackungsteil 12, das in dieser Form vorzugsweise als Auffüllmaterial Anwendung findet.

Figur 10 zeigt das Verpackungsteil in Form eines Rohres 13. Diese Formgebung findet zur Verpackung von Glaskörpern, Leuchtstoffröhren aber auch für Isolationszwecke Anwendung.

Die Figur 11 zeigt einen Querschnitt durch ein erfindungsgmäßes Verpackungsteil. Es sind hierbei die Stroh- bzw. Heufasern 18 erkennbar. Diese sind, wie bereits beschrieben, verpreßt und können mit einem Klebe- und Bindemittel 19 versehen werden.

Gegebenenfalls wird das Verpackungsteil mit einer Beschichtung 17 versehen, die eine Farbe, Beschriftung oder sonstiges aufnehmen kann.

Durch die Verwendung von Stroh und Heu für Verpackungsteile wird dieses bisher weitgehend überflüssige Natur produkt, die Umweltbelastung durch Kunststoffe und Ausbeutung von Holz und ähnlichen Rohstoffen wesentlich reduzieren.

## Ansprüche

1. Verpackungsteil aus biologischem Material, dadurch gekennzeichnet, daß dieses aus verpreßtem Stroh und/oder Heu besteht.

2. Verpackungsteil nach Anspruch 1, dadurch gekennzeichnet, daß dieses als Behälter (1) ausgebildet ist.

3. Verpackungsteil nach Anspruch 1, dadurch gekennzeichnet, daß dieses als winkelförmiger Kantenschutz (2) ausgebildet ist.

4. Verpackungsteil nach Anspruch 1, dadurch gekennzeichnet, daß dieses als winkelförmiger Eckschutz (3) mit an einer Stirnseite angeordneter Wandung (4), ausgebildet ist.

5. Verpackungsteil nach Anspruch 1, dadurch gekennzeichnet, daß dieses als winkelförmige Schale, mit an beiden Stirnseiten angeordneten Wandungen (6,7) ausgebildet ist.

6. Verpackungsteil nach Anspruch 1, dadurch gekennzeichnet, daß dieses als Würfel (8), Vierkantstab (9) oder Platte (10) ausgebildet ist.

7. Verpackungsteil nach Anspruch 1, dadurch gekennzeichnet, daß dieses eine zylindrische Form (11) aufweist.

8. Verpackungsteil nach Anspruch 1, dadurch gekennzeichnet, daß dieses als kugelförmiges Auffüllmaterial (12) ausgebildet ist.

9. Verpackungsteil nach Anspruch 1, dadurch gekennzeichnet, daß dieses als Rohr (13) ausgebildet ist.

10. Verpackungsteil nach Anspruch 1 - 5, dadurch gekennzeichnet, daß in den Flächen bzw. Wandungen des Verpackungsteils eingepreßte Vertiefungen (14) eingearbeitet sind.

11. Verpackungsteil nach Anspruch 1 - 5, dadurch gekennzeichnet, daß das Verpackungsteil durchgehende Löcher und/oder Bohrungen (15) aufweist.

12. Verpackungsteil nach Anspruch 1 - 5, dadurch gekennzeichnet, daß das Verpackungsteil eingepreßte Rillen (16) aufweist.

13. Verpackungsteil nach Anspruch 1 - 12, dadurch gekennzeichnet, daß das Verpackungsteil aus verpreßtem Stroh und Heu ohne jeglichen Klebstoff bzw. Bindemittel besteht.

14. Verpackungsteil nach Anspruch 1 - 12, dadurch gekennzeichnet, daß das Verpackungsteil aus verpreßtem Stroh oder Heu und verfestigtem biologischen Kleber oder Bindemittel besteht.

15. Verpackungsteil nach Anspruch 1 - 14, dadurch gekennzeichnet, daß das Verpackungsteil eine Beschichtung (17) aufweist.

Fig.1

1

14

2

15

Fig.2

3

Fig.3

4

16

5

6

15

7

Fig.4

Fig.5

Fig.6

Fig.7

Fig.8

Fig.9

13

Fig.10

17

Fig.11

19        18